# EUROPÄISCHE PATENTANMELDUNG

(11) **EP 0 713 911 A2**
(43) Veröffentlichungstag der Anmeldung: **29.05.1996**
(21) Anmeldenummer: 95111217.6
(22) Anmeldetag: 18.07.1995
(51) Int. Cl.: C12F 3/00, B01D 3/00

(54) **Verfahren und Vorrichtung zur Rückführung von bei thermischer Entalkoholisierung anfallenden Aromastoffen**

(30) Priorität: 20.08.1994 DE 4429606
(71) Anmelder: Schmidt-Bretten GmbH, D-75015 Bretten (DE)
(72) Erfinder: Körner, Rudolf, Dipl.-Ing., D-75015 Bretten-Diedelsheim (DE)
(74) Vertreter: Lemcke, Rupert, Dipl.-Ing.

(57) **Zusammenfassung**

Die Erfindung betrifft ein Verfahren und eine Vorrichtung zur Rückführung von bei thermischer Entalkoholisierung von Produkten wie insbesondere Bier anfallenden Aromastoffen, die vor und/oder während der Entalkoholisierung abgeführt und dem entalkoholisierten Produkt teilweise wieder zugeführt werden. Hierbei werden die Aromastoffe zusammen mit ebenfalls abgeführten Gasen wie insbesondere CO₂ in einem Verdichter, der in einer Gasleitung zwischen einem Ausgang der Anlage zum Abführen der Gase und einer Leitung für das entalkoholisierte Produkt vorgesehen ist, auf einen Druck komprimiert, der über demjenigen des entalkoholisierten Produktes und gemessen an dessen Temperatur unter der Löslichkeitsgrenze der Aromastoffe und Gase im entalkoholisierten Produkt liegt, woraufhin das komprimierte Gemisch aus Aromastoffen und Gasen dem entalkoholisierten Produkt zugeführt und in diesem gelöst wird.

## Beschreibung

Die Erfindung betrifft ein Verfahren zur Rückführung von bei thermischer Entalkoholisierung von Produkten wie insbesondere Bier anfallenden Aromastoffen, die vor und/oder während der Entalkoholisierung abgeführt und dem entalkoholisierten Produkt teilweise wieder zugeführt werden, sowie eine Vorrichtung insbesondere zur Durchführung des Verfahrens, wobei eine Entalkoholisierungsanlage einen Ausgang zum Abführen von Gasen wie insbesondere CO₂ und den darin gelösten Aromastoffen und eine Leitung für das entalkoholisierte Produkt aufweist.

Zur Verringerung oder weitgehenden Entfernung des Alkohols aus Wein und Bier, nachfolgend als Entalkoholisierung bezeichnet, finden hauptsächlich zwei Verfahrensarten Anwendung, nämlich Membranverfahren und thermische Verfahren. Die Membranverfahren, zu denen insbesondere Dialyse-Verfahren und Umkehr-Osmose zählen, haben aber den großen Nachteil, daß sie apparativ sehr aufwendig und wartungsintensiv sind, weshalb sich wirtschaftlicher und effektiver mit thermischen Verfahren arbeiten läßt.

Auch diese lassen sich wiederum in zwei Hauptgruppen aufteilen, in Eindampfverfahren und in Gegenstromdestillation, die auch als Rektifikation bezeichnet wird. Die wesentlichen Unterschiede zwischen diesen beiden Verfahren, nämlich die Konzentration des abdestillierten Alkohols und die Grade der möglichen Alkoholreduzierung, sprechen deutlich für die Gegenstromdestillation: Während hierbei ein Alkoholkonzentrat mit ungefähr 75 Vol.-% Alkohol anfällt, das z.B. an die Spritindustrie verkauft werden kann und somit die Entalkoholisierungskosten verringert, entsteht beim Eindampfverfahren ein abdestillierter Alkohol mit lediglich 8-12 Vol.-% Alkohol, der entweder unter Energiezufuhr vernichtet oder gegen Bezahlung von Abgaben dem Abwasser zugeführt werden muß. Die wesentlichen Vorteile beim Grad der Entalkoholisierung der Gegenstromdestillation liegen darin, daß sich problemlos ein extrem niedriger Alkoholgehalt von beispielsweise 0,1 Vol.-% Alkohol erzeugen läßt, so daß man zur Erreichung der für alkoholfreies Bier zulässigen Alkoholhöchstgrenze von 0,5 Vol.-% Alkohol wieder Originalbier zumischen kann, wodurch der Geschmack des Endproduktes stark verbessert wird. Beim Eindampfverfahren müssen dagegen bei einer Reduzierung des Alkoholgehaltes auf die für dieses Verfahren möglichen 0,4 bis 0,5 Vol.-% Alkohol ca. 50 % der ursprünglichen Biermenge als Wasserdampf ausgetrieben werden, so daß das hierbei entstehende Bierkonzentrat wieder mit aufbereitetem und entgastem Wasser (Originalbier ist wegen des hiermit verbundenen Alkoholanstiegs nicht möglich) auf die gewünschte Konzentration eingestellt werden muß.

Allen thermischen Verfahren ist jedoch der große Nachteil gemeinsam, daß aufgrund der hohen Temparaturen das im Bier gelöste CO₂ bei der Entalkoholisierung austritt und bei der Kondensation des Dampf/Alkoholgemisches die Kondensatorflächen verlegt. Da diese hierdurch viel größer ausgelegt werden müssen, als es ohne den CO₂-Niederschlag nötig wäre, wird die Entalkoholisierungsanlage entgast, das heißt CO₂ und alle anderen Gase und mit Ihnen auch die wichtigsten Aromastoffe wie höhere aliphatische Alkohole und Ester werden aus der Anlage abgeführt, während mittelkettige Fettsäuren und deren Ethylester zum überwiegenden Teil im Bier verbleiben. Hierdurch ergibt sich eine deutliche Veränderung des Aromas zu einer Geschmacksnote, die durch Fettsäuren und Fettsäureester geprägt ist. Schließlich muß das entalkoholisierte Bier durch eine entsprechende Karbonisiereinrichtung mit Hilfe aromaloser Kohlensäure auf den gewünschten CO₂-Gehalt angehoben werden.

Um wenigstens einen Teil der Aromastoffe dem abgeführten CO₂ zu entnehmen und dem entalkoholisierten Produkt rückzuführen, wird das in einem Entgaser anfallende Kohlendioxid über eine Vakuumleitung in einen Aromawäscher geführt und mit dem entalkoholisierten Produkt bzw. mit Brauwasser gewaschen. Die mit den wasserlöslichen Aromastoffen angereicherte Flüssigkeit wird hierauf dem entalkoholisierten Bier zudosiert. Hierdurch lassen sich bis zu 12% der Ester rückführen, was bereits zu einer wahrnehmbaren Geschmacksverbesserung des entalkoholisierten Produktes führt.

Da aber immer noch der gesamte restliche Anteil der im CO₂ gelösten Aromastoffe unwiederbringlich in die Umluft abgeblasen wird, ist offensichtlich, welche Geschmacksunterschiede zwischen einem Originalbier und einem entalkoholisierten Bier bestehen müssen. Es ist somit Aufgabe der vorliegenden Erfindung, zumindest einen großen Teil der bisher in die Umwelt abgeblasenen Aromastoffe dem entalkoholisierten Bier wieder zuzuführen und somit dessen Geschmack demjenigen des Originalbiers wieder anzunähern.

Diese Aufgabe wird erfindungsgemäß dadurch gelöst, daß die Aromastoffe zusammen mit ebenfalls abgeführten Gasen wie insbesondere CO₂ auf einen Druck komprimiert werden, der über demjenigen des entalkoholisierten Produktes liegt und der gemessen an dessen Temparatur unter der Löslichkeitsgrenze der Aromastoffe und Gase im entalkoholisierten Produkt liegt, und daß das komprimierte Gemisch aus Aromastoffen und Gasen dem entalkoholisierten Produkt zugeführt und in diesem gelöst wird. Hierdurch ist es möglich, sowohl die Geschmacksstoffe zum großen Teil wenn nicht sogar vollständig rückzuführen, als auch das aus der Entalkoholisierungsanlage entgaste CO₂ wieder zu verwerten. Dies macht eine Karbonisierung des entalkoholisierten Produktes und somit einen zusätzlichen Verfahrensschritt und apparativen Aufwand überflüssig, außerdem kann anstatt synthetischer Kohlensäure das ursprünglich im Originalbier bei der Vergärung entstandene CO₂ verwendet werden, was den Geschmack des Endproduktes noch einmal wesentlich verbessert.

Durch eine solche Aroma- und CO₂-Rückführung läßt sich auch erstmals das immer wieder geforderte "absolut alkoholfreie" Bier mit einem Alkoholgehalt von maximal 0,1 Vol.-% Alkohol mit geschmacklich gutem Ergebnis herstellen, da bisher die zu einem genießbaren Produkt führende Aromaverbesserung immer nur durch Zumischen von alkoholhaltigem Originalbier erfolgte, wodurch der Alkoholgehalt natürlich über 0,1 Vol.-% Alkohol anstieg.

Die Komprimierung des Gemisches auf einen Druck, der zweckmäßigerweise um ungefähr 0,5 bar über demjenigen des entalkoholisierten Produktes liegt und ungefähr zwischen 2 bar und 6 bar beträgt abhängig vom Druck im Drucktank, wobei die Löslichkeitsgrenze des Gemisches im entalkoholisierten Produkt gemessen an der dortigen Temperatur einzuhalten ist, führt dazu, daß nicht nur die Rückführung von CO₂ und den darin enthaltenen Aromastoffen ermöglicht wird, sondern daß dieses Gemisch auch im entalkoholisierten Produkt gelöst verbleibt, unabhängig von der Art der Aromastoffe.

Auch beim erfindungsgemäßen Verfahren kann das Gemisch vor der Komprimierung einen Aromawäscher durchlaufen, in dem dessen wasserlösliche Komponenten zumindest teilweise ausgewaschen und dem entalkoholisierten Produkt wieder zugeführt werden können. Die Rückführung läßt sich darüber hinaus noch dadurch verbessern, daß das Gemisch nach der Komprimierung und vor der Zuführung einen Kondensator durchläuft und das hierbei entstehende Kondensat zumindest teilweise unabhängig von dem komprimierten gasförmigen Gemisch dem entalkoholisierten Produkt zugeführt wird.

Eine insbesondere zur Durchführung des erfindungsgemäßen Verfahrens vorgesehene Vorrichtung zur Rückführung von in einer thermischen Entalkoholisierungsanlage aus Produkten wie insbesondere Bier anfallenden Aromastoffen, die einen Ausgang zum Abführen von Gasen wie insbesondere CO₂ und den darin gelösten Aromastoffen und eine Leitung für das entalkoholisierte Produkt aufweist, ist erfindungsgemäß dadurch gekennzeichnet, daß die Entalkoholisierungsanlage eine Gasleitung aufweist, die den Ausgang mit der Produktleitung zur Zuführung des Gemisches aus Aromastoffen und Gasen verbindet, und daß in der Gasleitung ein Verdichter angeordnet ist zur Komprimierung des Gemisches auf einen Druck, der über demjenigen in der Produktleitung und gemessen an der dortigen Temparatur unterhalb der Löslichkeitsgrenze der Aromastoffe und Gase im entalkoholisierten Produkt liegt. Der Verdichter ist zweckmäßigerweise so ausgelegt, daß die Druckdifferenz zwischen komprimiertem Gemisch und entalkoholisierten Produkt vor der Zuführung in der Größenordnung von ungefähr 0,5 bar liegt, und daß der Verdichter das Gemisch vor der Zuführung auf einen Druck zwischen ungefähr 2 bar und 6 bar komprimiert. Der Ausgang zum Abführen der Aromastoffe und Gase kann beispielsweise aus einem Entgaser oder einem Abluftventil bestehen.

Zweckmäßigerweise weist die Entalkoholisierungsanlage außerdem einen Aromawäscher auf, der dem Verdichter vorgeschaltet ist und durch den die wasserlöslichen Komponenten des Gemisches auswaschbar sind, wobei dieser über eine Flüssigkeitsleitung mit der Produktleitung verbunden ist, über die die ausgewaschenen Komponenten dem entalkoholisierten Produkt zuführbar sind. Dem Verdichter ist darüber hinaus zweckmäßigerweise ein Kondensator nachgeschaltet, der über eine Kondensatleitung mit der Produktleitung verbunden ist und über die die im Kondensator auskondensierten Komponenten dem entalkoholisierten Produkt zuführbar sind.

Besonders vorteilhaft für die Rückführung des Gemisches aus Gasen und Aromastoffen ist es, wenn die Verbindung von Gasleitung und Produktleitung über einen Injektor erfolgt, der das Gemisch dem entalkoholisierten Produkt zuführt und es in diesem löst. Ebenso ist es aber auch möglich, daß die Verbindung über eine herkömmliche Karbonisierungsanlage erfolgt, in der dem bei der Vergärung entstandenen CO₂ zusätziches CO₂ zur Anhebung des Kohlendioxidgehalts des entalkoholisierten Produktes zugefügt werden kann.

Wenn dem Verdichter ein Gaskessel nachgeschaltet ist, der zur Aufbewahrung des komprimierten Gemisches vor seiner Zuführung in die Produktleitung dient, kann in diesem eine Kühlschlange vorgesehen werden, durch die das im Gaskessel aufbewahrte Gemisch noch vor der Zuführung in das entalkoholisierte Produkt auskondensiert werden kann.

Weitere Merkmale und Vorteile der vorliegenden Erfindung ergeben sich aus der nachfolgenden Beschreibung eines Ausführungsbeispiels anhand der Zeichnungen; hierbei zeigen
- Figur 1: eine erfindungsgemäße Vorrichtung zur Rückführung von in CO₂ gelösten Aromastoffen,
- Figur 2: eine herkömmliche Entalkoholisierungsanlage, die nach dem Prinzip der Gegenstromdestillation, aber ohne CO₂-Rückführung arbeitet.

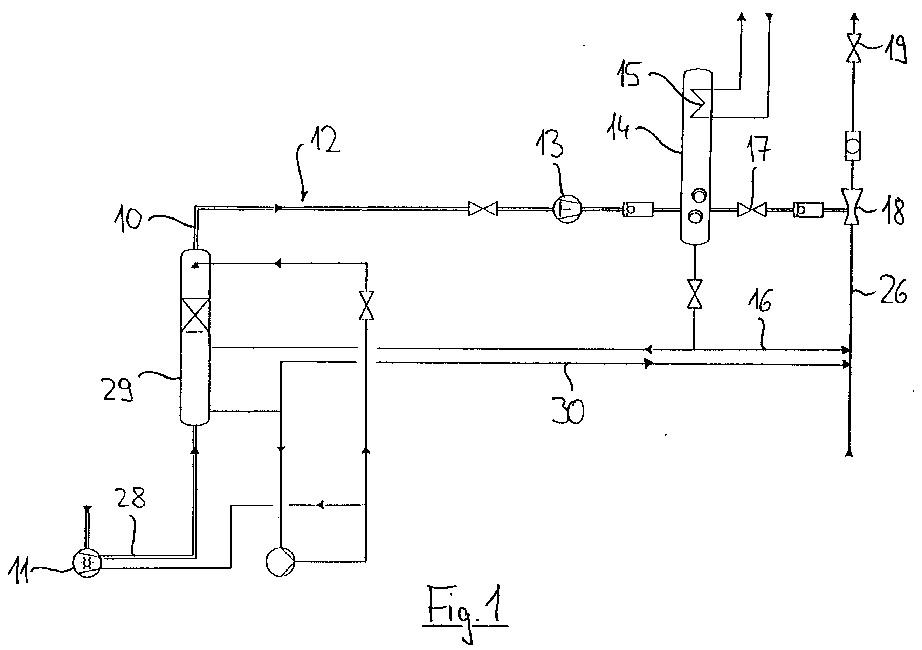

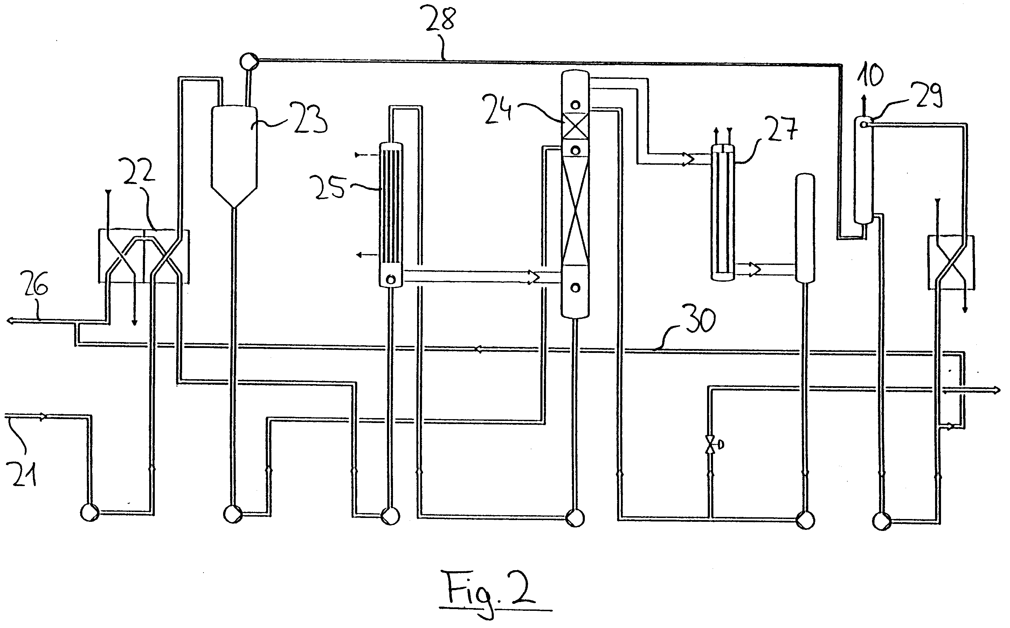

Um die in Figur 1 dargestellte Vorrichtung zur CO₂-Rückführung anschaulicher erklären zu können, soll nachfolgend kurz auf die Arbeitsweise einer thermischen Entalkoholisierungsanlage eingegangen werden. Figur 2 zeigt eine solche mit Hilfe von Gegenstromdestillation arbeitende Anlage, bei der das bei Ziffer 21 zugeführte Bier im wesentlichen die nachfolgend aufgeführten Komponenten durchläuft: Das Bier gelangt vom Lagerkeller bzw. Drucktank mit ca. 0°C in einen Wärmetauscher 22 und wird dort auf 42°C erwärmt. Hierauf werden mittels eines Entgasers 23 das Kohlendioxid und die darin gelösten Aromastoffe weitgehend entfernt, wobei im Entgaser noch keine partielle Verdampfung erfolgt, da das Vakuum im Entgaser noch über der Siedetemparatur des Bieres liegt. Nach der Entfernung des Kohlendioxids gelangt das Bier von oben auf eine Abtriebssäule einer Rektifikationskolonne 24, woraufhin durch den Energieeintrag über die erzeugten Brüden im Kolonnensumpf die Temparatur auf 48°C steigt. Von dort wird das Bier in einen Fallstromverdampfer 25 geleitet, in dem die Brüden aus dem Bier gewonnen und dem Kolonnensumpf zugeführt werden. Das entalkoholisierte Bier wird über den Wärmetauscher 22 auf 0°C abgekühlt und verläßt die Anlage mit einem Alkoholgehalt von 0,1 Vol.-% Alkohol über eine Produktleitung 26. Die aus dem Bier entstandenen Brüden strömen in der Rektifikationskolonne gegen die Flüssigkeit vom Kolonnensumpf zum Kolonnenkopf, gelangt dabei über die Verstärkersäule und erreicht am oberen Ende eine Konzentration von 75 Vol.-% Alkohol. Vom Kolonnenkopf gelangt Alkoholdampf in einen Kondensator 27 und wird dort niedergeschlagen. Ein Teil des Alkohols wird als flüssige Phase dem Kolonnenkopf wieder zugeleitet, während der andere Teil über einen nicht dargestellten Plattenkühler die Anlage mit etwa 5°C verläßt.

Das im Entgaser 23 anfallende Kohlendioxid wird über eine Vakuumleitung 28 in einen Aromawäscher 29 geführt und mit dem entalkoholisierten Produkt bzw. mit Brauwasser gewaschen. Die mit den auswaschbaren Aromastoffen angereicherte Flüssigkeit wird hierauf dem in der Produktleitung 26 fließenden entalkoholisierten Produkt über eine Flüssigkeitsleitung 30 zugeführt.

Wie durch den vom Aromawäscher 19 nach oben weggehenden Pfeil 10 angedeutet, gehen bei den herkömmlichen Entalkoholisierungsanlagen zusammen mit dem CO₂ alle nicht-auswaschbaren Aromastoffe verloren und werden in die Umwelt abgeblasen. Hier setzt die erfindungsgemäße Vorrichtung zur CO₂-Rückführung an, die in Figur 1 dargestellt ist.

Dort ist nochmals die Vakuumleitung 28 zu erkennen, die mit Hilfe einer Vakuumpumpe 11 alle beim Prozeß der Entalkoholisierung anfallenden Gase dem aus einem Aufbauabscheider bestehenden Aromawäscher 29 zuführt. Hier erfolgt die Auswaschung vieler Aromastoffe, die zum Teil über die Flüssigkeitsleitung 30 direkt in die Produktleitung 26 geführt werden. Nicht auswaschbare Aromakomponenten, CO₂ und andere Gase verlassen den Aromawäscher 29 über den Abluftstutzen 10 und gelangen über eine Gasleitung 12 zu einem Verdichter 13, der das Gemisch auf den später zur Imprägnierung notwendigen Druck von 2 bar bis 6 bar komprimiert und in einen Gaskessel 14 befördert. Dieser Gaskessel fungiert mit Hilfe einer Kühlschlange 15 gleichzeitig als Kondensator, wodurch alle kondensierbaren Produkte des Gasgemisches auskondensiert werden. Das sich am Boden ansammelnde Kondensat kann zum einen in den Aromawäscher 29 zurückgeführt oder aber auch direkt über eine Kondensatleitung 16 dem entalkoholisierten Produkt in der Produktleitung 26 zugeführt werden.

Vom Gaskessel 14 aus strömt das komprimierte, gekühlte und noch Aromastoffe enthaltende Gas zu einem Überströmventil 17, welches in einem Druckbereich zwischen 2 bar und 6 bar regelbar ist, um die Löslichkeitsgrenzen von CO₂ als Funktion von Temperatur und Druck nicht zu überschreiten. Von dort wird das Gemisch über einen in der Produktleitung 26 angebrachten Injektor 18 dem entalkoholisierten Produkt zugeführt und darin gelöst. Der hierzu erforderliche Gegendruck kann mittels eines Druckhalteventils 19 eingestellt werden.

Das erfindungsgemäße Verfahren und die hierfür vorgesehene Vorrichtung ermöglichen es somit, den großen bisherigen Nachteil thermischer Entalkoholisierungsverfahren zu beseitigen, indem das bei hohen Temperaturen ausfallende und durch Entgasen aus der Anlage entfernte CO₂ zusammen mit den entsprechenden Aromastoffen wieder dem entalkoholisierten Produkt zugeführt und in diesem gelöst werden kann. Bis auf die im Alkoholkonzentrat enthaltenen und zusammen mit diesen abgeführten Aromastoffe können nun alle im Originalbier enthaltenen Aromastoffe wieder rückgeführt werden. Besonders vorteilhaft ist darüber hinaus auch die Tatsache, daß das ursprünglich im Bier enthaltene CO₂ nicht durch synthetisches Kohlendioxid ersetzt werden muß, sondern ebenfalls rückgeführt werden kann.

## Patentansprüche

1. Verfahren zur Rückführung von bei thermischer Entalkoholisierung von Produkten wie insbesondere Bier anfallenden Aromastoffen, die vor und/oder während der Entalkoholisierung abgeführt und dem entalkoholisierten Produkt teilweise wieder zugeführt werden,
dadurch gekennzeichnet,
daß die Aromastoffe zusammen mit ebenfalls abgeführten Gasen wie insbesondere CO₂ auf einen Druck komprimiert werden, der über demjenigen des entalkoholisierten Produktes liegt und der gemessen an der Temperatur unter der Löslichkeitsgrenze der Aromastoffe und Gase im entalkoholisierten Produkt liegt, und daß das komprimierte Gemisch aus Aromastoffen und Gasen dem entalkoholisierten Produkt zugeführt und in diesem gelöst wird.

2. Verfahren nach Anspruch 1,
dadurch gekennzeichnet,
daß die Druckdifferenz zwischen komprimiertem Gemisch und entalkoholisiertem Produkt vor der Zuführung in der Größenordnung von ungefähr 0,5 bar liegt.

3. Verfahren nach Anspruch 1,
dadurch gekennzeichnet,
daß das Gemisch vor der Zuführung auf einen Druck zwischen ungefähr 2 bar und 6 bar komprimiert wird und insbesondere auf die Anlagenverhältnisse einstellbar komprimiert wird.

4. Verfahren nach Anspruch 1,
dadurch gekennzeichnet,
daß das Gemisch vor der Komprimierung einen Aromawäscher durchläuft, in dem dessen wasserlösliche Komponenten zumindest teilweise ausgewaschen und dem entalkoholisierten Produkt wieder zugeführt werden.

5. Verfahren nach Anspruch 1, daß das Gemisch nach der Komprimierung und vor der Zuführung einen Kondensator durchläuft und das hierbei entstehende Kondensat zumindest teilweise dem entalkoholisierten Produkt zugeführt wird.

6. Vorrichtung zur Rückführung von in einer thermischen Entalkoholisierungsanlage aus Produkten wie insbesondere Bier anfallenden Aromastoffen, insbesondere zur Durchführung des Verfahrens nach Anspruch 1, wobei die Anlage einen Ausgang zum Abführen von Gasen wie insbesondere CO₂ und den darin gelösten Aromastoffen und eine Leitung für das entalkoholisierte Produkt aufweist,
dadurch gekennzeichnet,
daß die Entalkoholisierungsanlage eine Gasleitung (12,28) aufweist, die den Ausgang mit der Produktleitung (26) zur Zuführung des Gemisches aus Aromastoffen und Gasen verbindet, und daß in der Gasleitung (12,28) ein Verdichter (13) angeordnet ist zur Komprimierung des Gemisches auf einen Druck, der über demjenigen in der Produktleitung (26) und gemessen an der dortigen Temperatur unter der Löslichkeitsgrenze der Aromastoffe und Gase im entalkoholisierten Produkt liegt.

7. Vorrichtung nach Anspruch 6,
dadurch gekennzeichnet,
daß die Druckdifferenz zwischen dem im Verdichter (13) komprimierten Gemisch und dem entalkoholisierten Produkt vor der Zuführung in der Größenordnung von ungefähr 0,5 bar liegt.

8. Vorrichtung nach Anspruch 6,
dadurch gekennzeichnet,
daß der Verdichter (13) das Gemisch vor der Zuführung auf einen Druck komprimiert, der ungefähr zwischen 2 bar und 6 bar liegt und insbesondere auf die entsprechenden Anlagenverhältnisse einstellbar ist.

9. Vorrichtung nach Anspruch 6,
dadurch gekennzeichnet,
daß dem Verdichter (13) ein Aromawäscher (29) vorgeschaltet ist, durch den wasserlösliche Komponenten des Gemisches auswaschbar sind, und daß der Aromawäscher (29) über eine Flüssigkeitsleitung (30) mit der Produktleitung (26) verbunden ist, über die die ausgewaschenen Komponenten dem entalkoholisierten Produkt zuführbar sind.

10. Vorrichtung nach Anspruch 6,
dadurch gekennzeichnet,
daß dem Verdichter (13) ein Kondensator (15) nachgeschaltet ist, der über eine Kondensatleitung (16) mit der Produktleitung (26) verbunden ist und über die im Kondensator (15) auskondensierte Komponenten dem entalkoholisierten Produkt zuführbar sind.

11. Vorrichtung nach Anspruch 6,
dadurch gekennzeichnet,
daß die Verbindung von Gasleitung (12,28) und Produktleitung (26) über einen Injektor (18) erfolgt, der das Gemisch dem entalkoholisierten Produkt zuführt.

12. Vorrichtung nach Anspruch 6,
dadurch gekennzeichnet,
daß dem Verdichter (13) ein Gaskessel (14) nachgeschaltet ist, der zur Aufbewahrung des komprimierten Gemisches vor seiner Zuführung in die Produktleitung (26) dient.

13. Vorrichtung nach Anspruch 10 und 12,
dadurch gekennzeichnet,
daß der Kondensator (15) aus einer im Gaskessel (14) angeordneten Kühlschlange besteht.

14. Vorrichtung nach Anspruch 6,
dadurch gekennzeichnet,
daß die Verbindung von Gasleitung (12, 28) und Produktleitung (26) über eine Karbonisierungsanlage erfolgt, die das Gemisch dem entalkoholisierten Produkt zuführt.
